# EUROPEAN PATENT APPLICATION

(11) **EP 3 518 064 A1**
(43) Date of publication of application: **31.07.2019**
(21) Application number: 16916681.6
(22) Date of filing: 06.12.2016
(51) Int. Cl.: G05D 1/02

(54) **MOBILE ROBOT AND NAVIGATION METHOD THEREFOR**

(30) Priority: 20.09.2016 CN 201610836638
(71) Applicant: Shenzhen Silver Star Intelligent Technology Co., Ltd., Shenzhen, Guangdong 518110 (CN)
(72) Inventor: CHO, Ruibo, Shenzhen, Guangdong 518110 (CN)
(74) Representative: Viering, Jentschura & Partner mbB Patent- und Rechtsanwälte
(86) International application number: PCT/CN2016/108710
(87) International publication number: WO 2018/053942

(57) **Abstract**

The present invention discloses a mobile robot which includes a processor module, and a distance sensor, an auxiliary obstacle avoiding module, and an interacting module which are all connected with the processor module. The distance sensor is configured to scan an operating space of the mobile robot to build an environmental map. The auxiliary obstacle avoiding module is configured to detect obstacle and cliff boundary in a sensing blind area of the distance sensor while the mobile robot is moving to update the environmental map. Subscribers input virtual obstacle information as needed into the environmental map by the interacting module to complete the environmental map and plan movement path for operation of the mobile robot according to the environmental map. The mobile robot can build up and gradually complete the environmental map of the operating space, and plan movement path of the mobile robot for operation according to the environmental map, thereby accurately avoiding obstacle, reaching target position successfully, saving time and energy. A navigating method for a mobile robot is further disclosed.

## Description

This application claims priority to Chinese Patent Application No. 201610836638.8 filed with the Chinese Patent Office on September 20, 2016 and entitled "Mobile Robot and Navigating Method for Mobile Robot", the entirety of which is incorporated herein by reference.

### TECHNICAL FIELD

The present invention relates to intelligent device technical field, and more particularly, to mobile robot and navigating method for mobile robot based on map construction.

### BACKGROUND

At present, mobile robots are applied in many fields, for example unmanned vehicle, cleaning robot etc., especially the house hold cleaning robots have been widely used in home service, reducing people's trouble of housework. In prior art, mobile robots detect an obstacle in short distance ahead by simply triggering switches or infrared sensing devices. During the move, only when crashing into an obstacle, can the mobile robot adjust its moving direction, and then following preset mode, the mobile robot continues moving in a fool style. In plural collisions with obstacle, it is easy to miss leading direction of navigation in an operating space. Such simple means of obstacle avoidance and path planning make the mobile robot march in the operating space without definite leading direction of navigation, and finally leading to a reciprocating movement between some positions. In worse condition, the mobile robot cannot reach preset object location, thereby wasting time and energy.

### CONTENTS OF THE INVENTION

Technical problem to be solved by embodiments of the present invention is to provide a mobile robot and navigating method for mobile robot, the mobile robot and navigating method for mobile robot can build up and gradually complete an environmental map of an operating space, planning movement path of the mobile robot for operation according to the environmental map, thereby accurately avoiding obstacle, reaching target position successfully, saving time and energy.

In order to solve the technical problem, the following embodiments are applied.

In one aspect, one embodiment of the present invention provides a mobile robot including a processor module, and a distance sensor, an auxiliary obstacle avoiding module, and an interacting module which are all connected with the processor module;
the distance sensor is configured to scan an operating space of the mobile robot to build an environmental map, and indicate locations of obstacle in the environmental map, the distance sensor sending the environmental map to the processor module, the processor module controlling movement of the mobile robot according to the environmental map;
the auxiliary obstacle avoiding module is configured to detect obstacle and cliff boundary in a sensing blind area of the distance sensor while the mobile robot is moving, and transferring position information of obstacle and cliff boundary in the sensing blind area to the processor module, the processor module marking position information of the obstacle and cliff boundary in the sensing blind area on the environmental map, and delivering the environmental map to the interacting module, so as to enable a subscriber to input virtual obstacle information as needed into the environmental map by the interacting module, and feeding back to the processor module;
the processor module updates the environmental map according to the virtual obstacle information, and plans movement path for operation of the mobile robot according to the environmental map.

Wherein, the distance sensor forms an angle with heading direction of the mobile robot, so as to detect obstacle about to fall into a width scope of a body of the mobile robot ahead hereof while the mobile robot is moving, and marking position information of the obstacle about to fall into the width scope of the body of the mobile robot on the environmental map,
the processor module controls the mobile robot to optimize the movement path with reference to the location positions to avoid the obstacle about to fall into the width scope of the body of the mobile robot, before colliding with the obstacle about to fall into the width scope of the body of the mobile robot.

Wherein, the angle is greater than or equal to 5 degrees, and less than or equal to 60 degrees.
Wherein, the mobile robot includes a main body and a controller separated from the main body; the processor module, the distance sensor and the auxiliary obstacle avoiding module are arranged in the main body, and the interacting module is integrated with the controller.

Wherein, a first communication module is arranged in the main body, connected with the processor module; the controller further comprises a second communication module connected with the interacting module; the first communication module and the second communication module are configured to carry out communication between the main body and the controller.

Wherein, the mobile robot further comprises a storage module, the storage module being connected with the processor module and the distance sensor, the environmental map being stored in the storage module, so that the environmental map can be repeatedly utilized.

Wherein, the distance sensor is a laser distance sensor.

Wherein, the auxiliary obstacle avoiding module includes at least one of a ground detecting unit, a wall detecting unit and a collision detecting unit.

In another aspect, another embodiment of the present invention provides a navigating method for mobile robot, includes,
rotating a mobile robot with a distance sensor at an angle in an operating space, scanning environment of the operating space, initially building an environmental map, and indicating positions of obstacle in the environmental map,
moving along boundary of the environmental map in a circle, detecting obstacle and cliff boundary in sensing blind area of the distance sensor, and marking obstacle and cliff boundary in sensing blind area of the distance sensor on environmental map, thereby updating the environmental map;
transmitting the environmental map to an interacting module, inputting virtual obstacle through the interacting module by a subscriber, completing the environmental map;
planning movement path for operation according to the environmental map, avoiding all the obstacle and virtual obstacle; and
performing operation according to the movement path.

Wherein, the method further includes,
making the distance sensor angled with heading direction of the mobile robot;
detecting obstacle about to fall into a width scope of a body of the mobile robot
while the mobile robot is moving, marking position information of the obstacle about to fall into the width scope of the body of the mobile robot on the environmental map, and updating the environmental map;
optimizing the movement path with reference to the updated environmental map, avoiding the obstacle about to fall into the width scope of the body of the mobile robot.

Wherein, the method further includes saving the environmental map so that the environmental map can be repeatedly utilized.

Wherein, the step of rotating the mobile robot with a distance sensor at an angle in an operating space can be,
rotating the mobile robot with a distance sensor at 360 degrees in an operating space. Comparing to the prior art, some effective results of the embodiments are listed below:
In some embodiment of the present invention, the mobile robot includes distance sensor and auxiliary obstacle avoiding module. The distance sensor is configured to initially build an environmental map, and indicate locations of obstacle on the environmental map in an operating space. The auxiliary obstacle avoiding module is configured to detect obstacle and cliff boundary in sensing blind area of the distance sensor while the mobile robot is moving. The obstacle and cliff boundary are labeled on the environmental map by the processor module, thereby completing the environmental map, indicating obstacle of the operating space in maximum range on the environmental map, and improving accuracy of path planning.

The mobile robot includes an interacting module; with the help of interacting module, a subscriber can input virtual obstacle information as needed into the environmental map. For example, the virtual obstacle can be a place where the mobile robot is forbidden to reach by the subscriber, and can be obstacle undetected by the distance sensor and auxiliary obstacle avoiding sensor. The interacting module feedbacks the virtual obstacle to the processor module. The processor module notes the virtual obstacle on the environmental map to further complete the environmental map. An optimal movement path of the mobile robot can be perfectly planned, accurately avoiding all the obstacle and virtual obstacle, and cleaning obstacle in the movement path in running of the mobile robot, thereby the mobile robot can more accurately moves along the movement path, time saving, energy saving, and greatly improving working efficiency.

### BRIF DESCRIPTION OF THE DRAWINGS

To make embodiments of the present invention or technical solutions of prior art more apparent and explicit, the following are brief introductions of drawings incorporating in embodiments of the present invention. Obviously, the described embodiments are only part of the embodiments of the present invention, for a person skilled in the art can conceive equivalent drawings of deformation according to the following figures, without paying extra creative effort.
FIG. 1a is a schematic diagram of a mobile robot in the first embodiment of the present invention;
FIG. 1b is a position relation schematic view in heading direction between a distance sensor in one embodiment and the mobile robot in the first embodiment of the present invention;
FIG. 1c is a schematic diagram of encountering an obstacle ahead of the mobile robot in the first embodiment of the present invention;
FIG. Id is a schematic diagram of avoiding an obstacle ahead of the mobile robot in the first embodiment of the present invention;
FIG. 1e is a working course schematic diagram of the mobile robot in the first embodiment of the present invention;
FIG. 2 is a schematic diagram of a mobile robot in the second embodiment of the present invention;
FIG. 3a is a schematic diagram of a mobile robot in the third embodiment of the present invention;
FIG. 3b is a schematic diagram of encountering an obstacle ahead of the mobile robot in the third embodiment of the present invention;
FIG. 3c is a schematic diagram of avoiding an obstacle ahead of the mobile robot in the third embodiment of the present invention; and
FIG. 4 is a flowchart diagram of navigating method for mobile robot in the embodiments of the present invention.

### DETAILED DESCRIPTION OF THE INVENTION

Together with drawings of the embodiments of the present invention, explanations are elaborated with reference to the exemplary embodiments of the present invention as follows. Obviously, the described embodiments are only part embodiments of the present invention, not the whole embodiments. persons skilled in the art can alter and modify the embodiments to get relating embodiments without inventive effort, the relating embodiments conduced should be construed falling into the extent of the present invention.

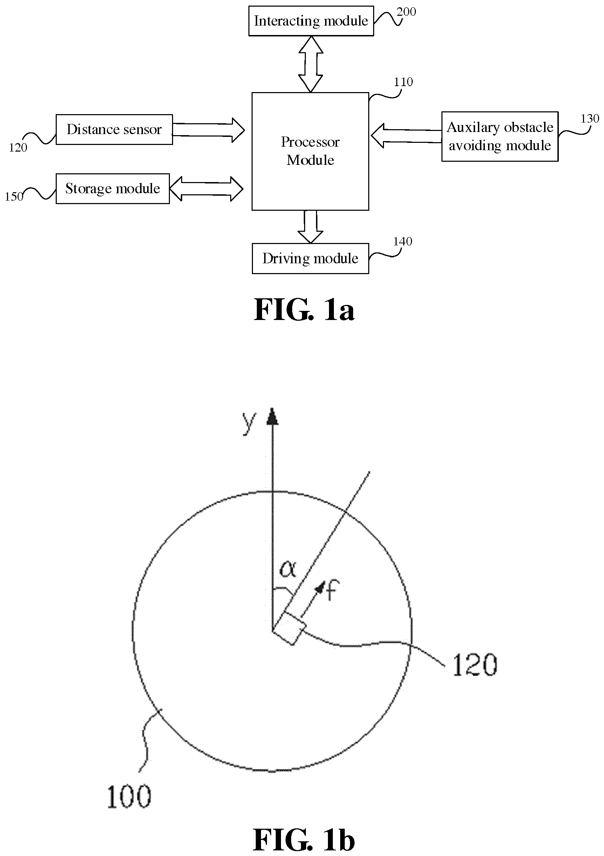

Referring to Fig. 1a, in Fig.1a, it shows a schematic diagram of a mobile robot in the first embodiment of the present invention. The first embodiment provides a mobile robot, the mobile robot includes processor module 110, distance sensor 120, auxiliary obstacle avoiding module 130, interacting module 200 and driving module 140. The distance sensor 120, auxiliary obstacle avoiding module 130, interacting module 200 and driving module 140 are all in connection with the processor module 110. The connection includes but not limit to electrical connection and/or communication connection.

Preferably, the distance sensor 120 includes laser device, position-posture sensor and data processing unit (not shown in Figs). Understandably, in one embodiment, the data processing unit can be integrated in the processor module 110. The distance sensor 120 is arranged to scan operating space of the mobile robot. The laser device is adopted to provide distance information between obstacle or boundary of the operating space with the mobile robot, and deliver the distance information to the data processing unit. The position-posture sensor is adopted to provide angle information of the obstacle or boundary of the operating space, and transmit the angle information to the data processing unit. The data processing unit processes the distance information and the angle information after SLAM (Simultaneous Localization And Mapping) algorithmic processing, building a two dimension environmental map for the operating space of the mobile robot, and marking obstacle in the operating space on the environmental map. In an alternative embodiment of the present embodiment, the distance sensor 120 can be combined with one or more from camera, millimeter wave radar and ultrasonic wave sensor, integrating the camera, millimeter wave radar and ultrasonic wave sensor with the laser device. The distance sensor 120 delivers the environmental map information to the processor module 110, the processor module 110 controls the mobile robot to move according to the environmental map. Preferably, in order to get a well improved map, at the beginning the mobile robot moves along the boundary of the environmental map. In details, the processor module 110 controls the driving module 140, the driving module 140 drives the mobile robot to move along the boundary of the environmental map, completing the environmental map during the course of circling the boundary of the environmental map. The mobile robot further includes storage module 150. The storage module 150 is connected with the processor module 110 and the distance sensor 12. The storage module 150 is adopted to save data information from the distance sensor 120 and the processor module 110, for example, storing the environmental map, and the environmental map can be in a repeat call flow, i.e., the data information in the storage module can be read by the processor module 110 and the distance sensor 120. Understandably, in some other embodiment, the storage module 150 can be integrated in the distance sensor 120.

The auxiliary obstacle avoiding module 130 is adopted to detect obstacle and cliff boundary in a sensing blind area of the distance sensor 120 while the mobile robot is moving, i.e., the auxiliary obstacle avoiding module 130 is designed to detect obstacle or some places having vertical trop where the distance sensor is unable to find, (such as stair steps). The auxiliary obstacle avoiding module 130 can be ground detecting unit, wall detecting unit, and/or collision detecting unit. The ground detecting unit is used for detecting ground sate, for example, whether there is a cliff boundary or step. The wall detecting unit is used for detecting whether there is an obstacle or not ahead of the mobile robot. The ground detecting unit and the wall detecting unit are both one of or combination of infrared sensor, ultrasonic sensor and, electromagnetic wave sensor. The collision detecting unit is a touch sensor, used for detecting obstacle ahead of the mobile robot. When colliding into an obstacle, the collision detecting unit is triggered, and perceives existence of the obstacle. The auxiliary obstacle avoiding module 130 transmits the obstacle and cliff boundary position information in sensing blind area of the distance sensor 120 to the processor module 110, and the processor module 110 indicates the obstacle and cliff boundary position information in the sensing blind area on the environmental map, thereby updating the environmental map. The environmental map is transmitted to the interacting module 200, so as to enable subscribers to input virtual obstacle information on demand on the interacting module 200, and feedback the virtual obstacle to the processor module 110. The processor module 110 notes the virtual obstacle on the environmental map to update the environmental map, thereby completing the environmental map. The processor module 110 plans optimal movement path for operation of the mobile robot according to the environmental map, avoiding all the obstacle and virtual obstacle. The interacting module 200 can be a touch screen set on surface of the mobile robot. The virtual obstacle can be obstacle undetected by the distance sensor and auxiliary obstacle avoiding sensor, or can ben ground regions where the mobile robot is forbidden to reach by the subscriber, for example, drawing a route moving to a virtual wall on the environmental map.

For the mobile robot is equipped with the distance sensor and the auxiliary obstacle avoiding module, the distance sensor is used for building a primary environmental map, marking obstacle in the operating space on the environmental map, the auxiliary obstacle avoiding module is used for detecting obstacle and cliff boundary in sensing blind area of the distance sensor while the mobile robot is moving, and marking the obstacle and cliff boundary on the environmental map by the processor module, thereby, completing the environmental map, indicating all the obstacle in the operating space in a maximum extent on the environmental map, and improving accuracy of the movement path.

Due to the mobile robot includes interacting module, by means of the interacting module, subscribers can input virtual obstacle information on demand into the environmental map, so as to make the environmental map more accurate and integral, and to make the processor module 110 to calculate a perfect movement path of the mobile robot according to the accurate and integral environmental map, thereby, avoiding all of the obstacle and the virtual obstacle in accuracy, operating smoothly, (such as cleaning the floor), time saving, energy saving, and great efficiency improvement.

In addition, the distance sensor 120 may form an angle with heading direction of the mobile robot. Referring to Fig. 1b, Fig. 1b is a position relation schematic view in heading direction between the distance sensor in one embodiment and the mobile robot in the first embodiment of the present invention. As shown in Fig. 1b, the mobile robot includes a main body 100, the distance sensor 120 is arranged on surface of the main body 100, defining heading direction of the main body as y. The distance sensor 120 forms an angle α with heading direction of the main body 100, i.e., laser launching direction of the laser device of the distance sensor 120 forms an angle α with heading direction of the main body 100. Preferably, the angle is greater than or equal to 5 degrees, and less than or equal to 60 degrees. Referring to arrow f shown in the figure, representing laser launching direction of the laser device of the distance sensor 120.

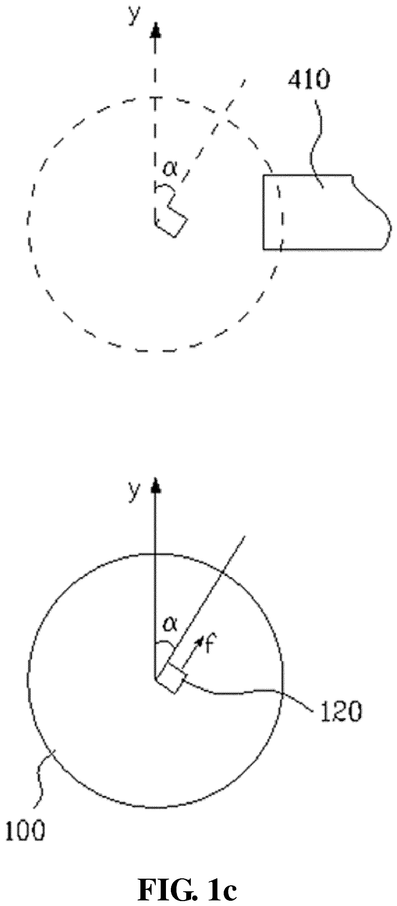

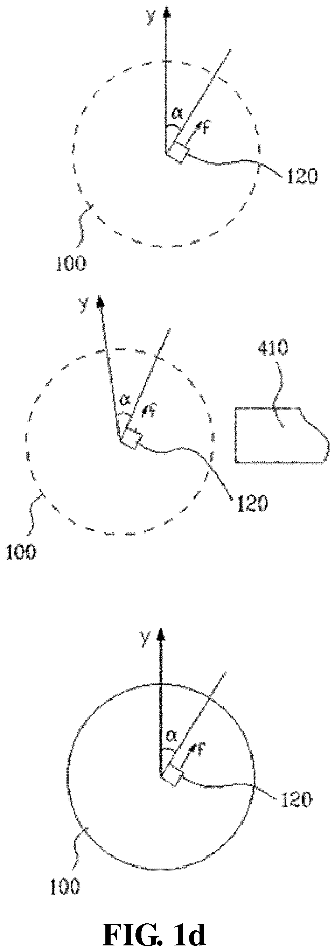

The distance sensor 120 forms an angle α with heading direction of the main body, to detecting obstacle about to fall into a width scope of a body of the mobile robot ahead while the mobile robot is moving, and marking position information of the obstacle about to fall into the width scope of the body of the mobile robot on the environmental map. The processor module 110 controls the mobile robot to optimize the movement path with reference to position information before colliding with the obstacle about to fall into the width scope of the body of the mobile robot, and to avoid the obstacle about to fall into the width scope of the body of the mobile robot. The obstacle about to fall in the width scope of the body of the mobile robot refer to obstacle which the mobile robot will collide into (touch onto), if the mobile robot keeps moving along the current heading direction (not changing direction). On conditions that launching direction of laser beams of the laser distance sensor is consistent with the heading direction of the mobile robot, due to concentration of the laser beams, obstacle deviating the heading direction right in front of the mobile robot are hard to be detected. Therefore, in the present embodiment, with arrangements of auxiliary obstacle avoiding module 130 and interacting module 200, setting the distance sensor 120 to form an angle α with heading direction of the main body 100 can make the distance sensor 120 easier to detect obstacle in locations deviating the heading direction right in front of the mobile robot, especially easy to detect angular portions of the obstacle. In the moving course of the mobile robot, when the distance sensor 120 detects obstacle ahead, the obstacle falling into the width scope of the body of the mobile robot (i.e., the mobile robot will collide into the obstacle, when it keeps moving along the current heading direction), the processor module 110 will control the driving module 140 to change direction of the main body 100 in advance, thereby bypassing the obstacle. As shown in Fig. 1c and Fig. Id, Fig. 1c is a schematic diagram of encountering an obstacle 410 ahead of the mobile robot in the first embodiment of the present invention, and Fig. 1d is a schematic diagram of avoiding the obstacle 410 ahead of the mobile robot in the first embodiment of the present invention. In Fig. 1c, there are the obstacle 410 ahead of the mobile robot in right anterior direction, the mobile robot will collide into the obstacle 410 when the mobile robot directly moves towards the obstacle 410 without changing moving direction, referring to the dash line portion shown in Fig. 1c. In present embodiment, the distance sensor 120 forms the angle α with the heading direction of the main body 100, to make the distance sensor 120 easier to detect obstacle 410 in locations deviating from heading direction right in front of the mobile robot, thereby the processor module 110 controlling the driving module 140 to drive the main body 100 changing direction in advance, bypassing the obstacle 410, as shown in Fig. Id, the main body 100 representing in dash lines is illustrated to demonstrate some positions of the mobile robot for bypassing the obstacle 410.

In order to make the first embodiment of the present invention more distinct, the following is working procedure descriptions of the mobile robot.

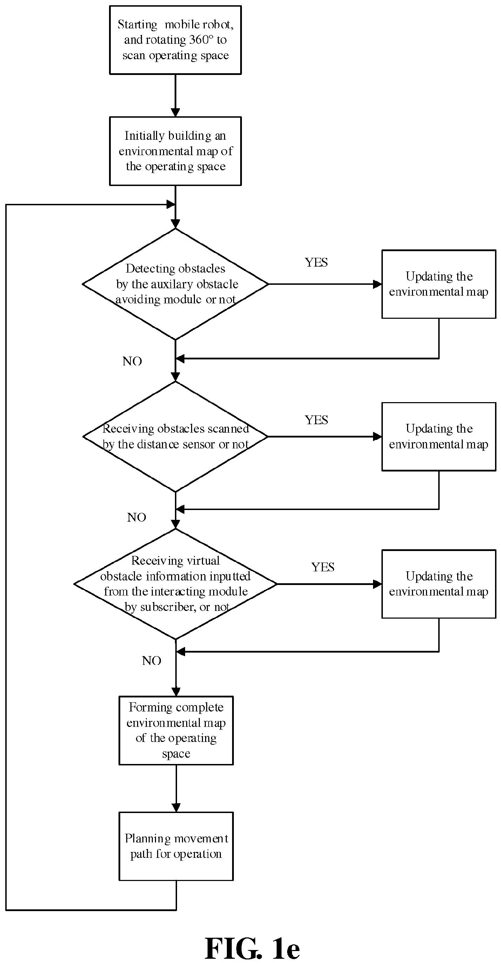

Referring to Fig. 1e, Fig. 1e is a workflow diagram showing working procedure of the mobile robot in first embodiment of the present invention. After the mobile robot is activated, firstly the mobile robot rotates on the ground of the operating space at a predetermined angle, such as 360 degrees, to make the distance sensor 120 to scan the environment of the operating space, initially building an environmental map of the operating space by SLAM algorithm, and transferring the environmental map to the processor module 110. The processor module 110 plans movement paths according to the environmental map initially built up. The mobile robot moves along boundary of the environmental map in a circle or moves in light of the movement path. During the moving course, if obstacle is detected by the auxiliary obstacle avoiding module 130, the processor module 110 will record the obstacle in the environmental map, updating the environmental map. If obstacle is not detected by the auxiliary obstacle avoiding module 130, then receiving information scanned by the distance sensor 120 during the moving course of the mobile robot. If obstacle is scanned by the distance sensor 120, the processor module 110 will record the obstacle in the environmental map, updating the environmental map. If obstacle information is not scanned by the distance sensor 120, in the moving course of the mobile robot, then, proceed to the next section. Subscribers can input virtual obstacle through the interacting module 200. The virtual obstacle includes position information of obstacle ignored by the auxiliary obstacle avoiding module 130 and the distance sensor 120, and any position information of places where the mobile robot is forbidden to reach by the subscriber. The processor module 110 will record the virtual obstacle in the environmental map, updating the environmental map, forming a complete environmental map of the operating space of the mobile robot. The processor module 110 plans movement path for operation of the mobile robot according to the complete environmental map. The mobile robot performs operations according to the movement path. For example, cleaning mobile robot cleans operating ground according to the movement path. In operating course of the mobile robot, the above-mentioned procedures can be repeatedly executed, updating and saving the environmental map at any time.

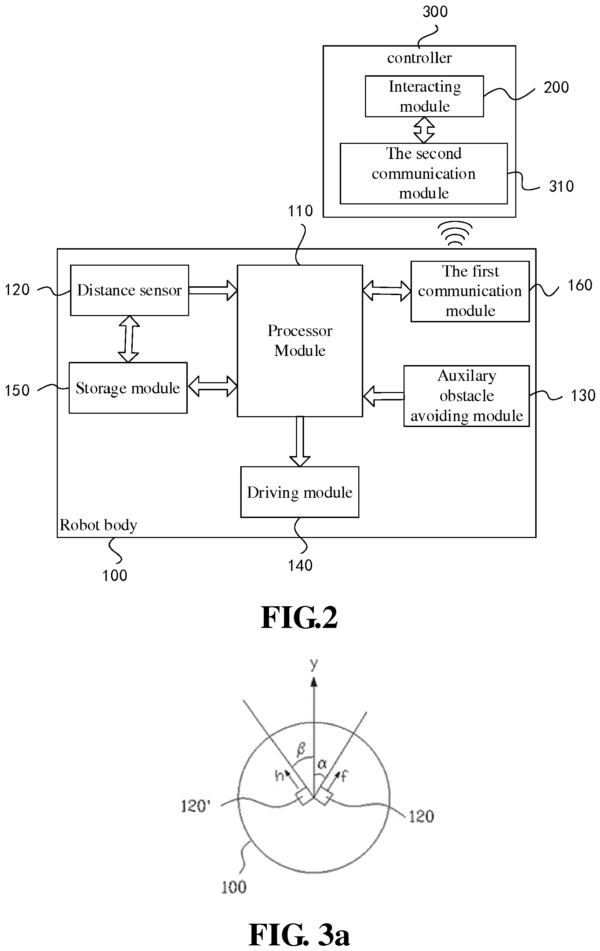

Referring to Fig. 2, Fig. 2 is a schematic diagram of the mobile robot in the second embodiment. Structure and working principle of the mobile robot in the second embodiment of the present invention is basically identical to the structure and working principle of the mobile robot in the first embodiment. The differences are as follows:
the mobile robot of the embodiment (the second embodiment of the present invention) includes a main body 100 and a controller 300 separated from the main body 100. The processor module 110, the distance sensor 120 and the auxiliary obstacle avoiding module 130 are disposed in the main body 100, The interacting module 200 is integrated in the controller. Moreover, the main body 100 further includes a first communication module 160. The controller 300 further includes a second communication module 310. The first communication module 160 and the second communication module 310 are adopted to realize communication between the main body 100 and the controller 300. The first communication module 160 and the processor module 110 are interconnected. The second communication module 310 and the interacting module 200 are interconnected. The controller can be a mobile phone, computer, remote control, or other mobile terminals. The interacting module can be APP installed in the mobile phone, computer, remote control, or other mobile terminals, so as to realize remote monitoring and control of the mobile robot. The first communication module 160 and the second communication module 310 can simultaneously include 2.4G wireless module (2.4Ghz RF transceiver/receiver module) and Wi-Fi module. The 2.4G wireless module can be used to set up data communication between the main body 100 and the controller 300 (such as remote control). The Wi-Fi module is adopted to connect internet, realizing on line interacting communication between the main body 100 and the controller 300 (such as a mobile phone). For example, remote control of APP client to the main body 100 can be carried out by the on line interacting communication, remote receiving of map data and working condition data from the main body 100, and transmitting position information of the virtual obstacle manually input by the subscriber to the main body 100.

Referring to Fig. 3a, Fig. 3a is a schematic diagram of a mobile robot in the third embodiment of the present invention. Structure and working principle of the mobile robot in the third embodiment of the present invention is basically identical to the structure and working principle of the mobile robot in the second embodiment. The differences are as follows:
The mobile robot of the embodiment (the third embodiment of the present invention) includes two distance sensors, i.e., a distance sensor 120 and a distance sensor 120', the distance sensor 120 and the distance sensor 120' respectively form an angle with the heading direction of the mobile robot, as shown in Fig. 3a, i.e., the distance sensor 120 forms an angle α with the heading direction of the mobile robot, and the distance sensor 120' forms an angle β with the heading direction of the mobile robot.

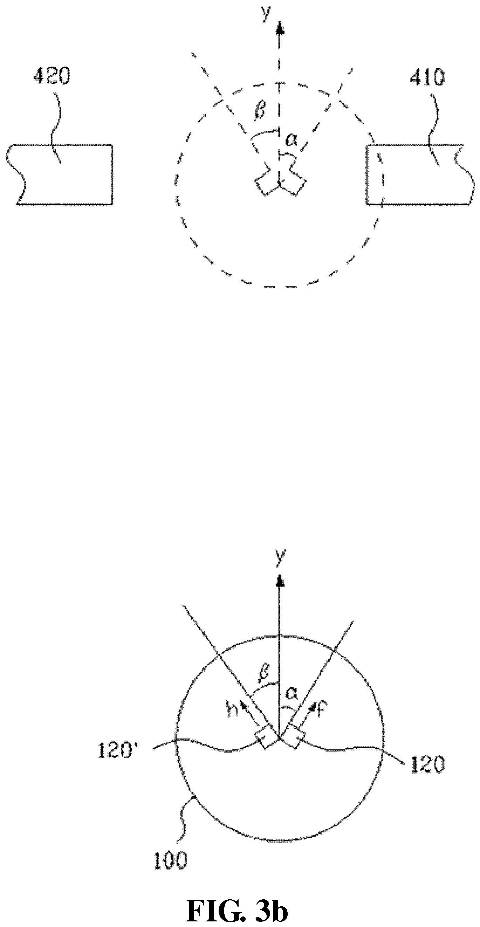

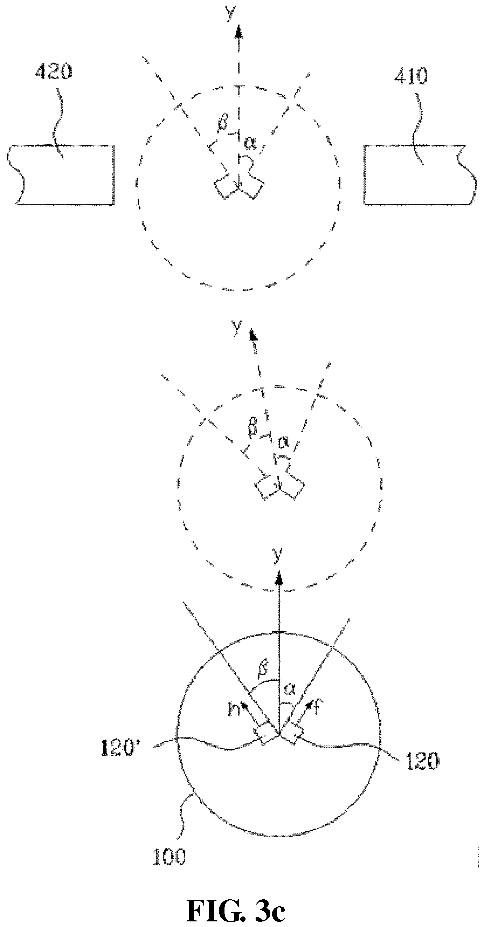

Preferably, angle α and angle β are both greater than or equal to 5 degrees, and less than or equal to 60 degrees. Axis y in the drawing is direction axis of the mobile robot, and also longitudinal symmetry axis of the mobile robot. The distance sensor 120 and the distance sensor 120' are both mounted on the main body 100. Preferably, the distance sensor 120 and the distance sensor 120' are respectively allocated on two sides of the axis y. Referring to Fig. 3b, Fig. 3b is a schematic diagram of encountering an obstacle ahead of the mobile robot in the third embodiment of the present invention. In Fig. 3b, the mobile robot will collide into the obstacle 410 on the right if the mobile robot directly moves forward. As shown in the figure of the dash line portion, if the mobile robot obsessively bypasses the obstacle 410, without paying attention to the obstacle 420 in the figure on the left, it is easy to collide into the obstacle 420. In present embodiment, due to arrangement of the distance sensor 120 and the distance sensor 120' on two sides of the axis y, the distance sensor 120 easily detects obstacle 410 on the same side thereof, and the distance sensor 120' easily detects obstacle 420 on the same side thereof. The distance sensor 120 sends the position information of the obstacle 410 to the processor module110. The distance sensor 120' sends the position information of the obstacle 420 to the processor module 110 too. Thereby, the processor module 110 can plan the coming movement paths in advance, controlling the driving module 140 driving the mobile robot to change direction, without collision of the obstacle 420 on the other side, simultaneously bypassing the obstacle 410. As shown in Fig. 3c, Fig. 3c is a schematic diagram of avoiding an obstacle ahead of the mobile robot in the third embodiment of the present invention. The main body 100 drew in dashed lines presents some going through positions when the mobile robot bypasses obstacle 410 and obstacle 420.

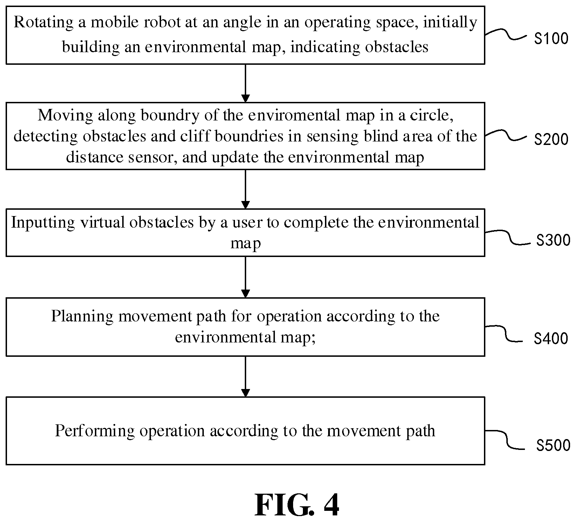

Referring to Fig. 4, Fig. 4 is a flowchart diagram of navigating method for mobile robot in the embodiments of the present invention. A navigating method for mobile robot is provided in embodiments of the present invention. The navigating method includes at least steps S100, S300, S400 and S500.

Step S100: rotating the mobile robot with a distance sensor at an angle in an operating space, initially building an environmental map, and indicating positions of obstacle in the environmental map.

In details, the mobile robot includes distance sensor. Make the mobile robot rotate in predetermined angle on an operating ground. Preferably, the mobile robot rotates at360 degrees on the operating ground, and the distance sensor rotates at 360 degrees with it, so as to scan the environment of the operating space, and initially build up the environmental map by SLAM algorithm, and indicate locations of obstacle on the environmental map. In one embodiment, boundary of the environmental map can be defined as portions at a distance from wall of the operating space. For example, the portions at 10cm-30cm distance therefrom, the example is exemplary, and cannot be construed as restriction for the present invention, concrete boundary can be defined according to pacific condition.

The distance sensor includes laser device, position-posture sensor and data processing unit. The laser device is adopted to provide distance information between obstacle or boundary of the operating space with the mobile robot, and deliver the distance information to the data processing unit. The position-posture sensor is adopted to provide angle information of the obstacle or boundary of the operating space, and transmit the angle information to the data processing unit. The data processing unit processes the distance information and the angle information after SLAM (Simultaneous Localization And Mapping) algorithmic processing, building a two dimension environmental map for the operating space of the mobile robot, and marking obstacle in the operating space on the environmental map. In an alternative embodiment of the present invention, the distance sensor 120 can be combined with camera, millimeter wave radar and ultrasonic wave sensor, integrating the camera, millimeter wave radar and ultrasonic wave sensor with the laser device.

Step S200: moving along boundary of the environmental map in a circle, detecting obstacle and cliff boundary in sensing blind area of the distance sensor, updating the environmental map.

In details, moving along boundary of the environmental map in a circle, detecting obstacle and cliff boundary in sensing blind area of the distance sensor, and marking obstacle and cliff boundary in sensing blind area of the distance sensor on the environmental map, thereby updating the environmental map. The cliff boundary refers to places having vertical trop, such as boundary of stair steps.

Step S300: subscribers input virtual obstacle to complete the environmental map.

In details, sending the environmental map to the interacting module, manually inputting virtual obstacle through the interacting module, to complete the environmental map. the virtual obstacle can be undetected obstacle before, can places where the mobile robot is forbidden to reach by the subscriber. In another word, the subscribers can input virtual walls by the interacting module, so as to restrain the mobile robot in a predetermined region.

Step S400, planning movement path for operation according to the environmental map.

In details, according to the completed environmental map, plan an optimal movement path of the mobile robot, avoiding all the obstacle and virtual obstacle.

Step S500, performing operations according to the movement path.

In details, the mobile robot carries out operations according to the planned movement path. In moving course for operating, the steps S100, S300, S400 and S500 can be repeated to build a more completed environmental map.

Detail process and procedure is illustrated as below:
Start the mobile robot, firstly, the mobile robot rotates at an angle in an operating space (such as 360 degrees), to make the distance sensor scanning environment of the operating space, initially building the environmental map by SLAM algorithm process. Transmit the environmental map to the processor module, the processor module plans movement path according to the initially built environmental map.

The mobile robot moves along boundary of the environmental map in a circle, or moves in light of the movement path. In the moving course, if obstacle is detected by the auxiliary obstacle avoiding module 130, the obstacle be recorded in the environmental map, thereby updating the environmental map. Receiving information scan by the distance sensor during the moving course of the mobile robot, recording the information on the environmental map, updating the environmental map again. Then, the subscribers input virtual obstacle by the interacting module. The virtual obstacle includes position information of obstacle ignored by the auxiliary obstacle avoiding module and the distance sensor, and any position information of places where the mobile robot is forbidden to reach by the subscriber. The processor module marks the virtual obstacle in the environmental map, updating the environmental map and forming a completed environmental map of the operating space of the mobile robot. The processor module plans movement path for operation of the mobile robot according to the completed environmental map, and the mobile robot performs operation according to the movement path.

In present invention, the mobile robot is equipped with the distance sensor and the mobile robot rotates at an angle on an operating ground (360 degrees), initially building the environmental map, and indicating positions of obstacle in the operating space on the environmental map. Then, the mobile robot moves along boundary of the environmental map in a circle, detecting obstacle and cliff boundary in sensing blind area of the distance sensor, and updating the environmental map, thereby completing the environmental map, indicating all the obstacle in the operating space in a maximum extent on the environmental map, and improving accuracy of the movement path.

In addition, subscribers can input virtual obstacle to complete the environmental map, the environmental map can be more accurate and integral. according to the accurate and integral environmental map, an optimal movement path of the mobile robot can be perfectly planned, accurately avoiding all the obstacle and virtual obstacle, smoothly carry out operations (such as ground cleaning), time saving and energy saving, and greatly improving working efficiency.

In the embodiments of the present invention, the navigating method further includes, Making the distance sensor angled with heading direction of the mobile robot;
Detecting obstacle about to fall into a width scope of a body of the mobile robot while the mobile robot is moving (i.e., the mobile robot will collide into the obstacle when it moves to the obstacle), marking the obstacle about to fall into the width scope of the body of the mobile robot on the environmental map, and updating the environmental map.

Optimizing the movement path with reference to the updated environmental map, avoiding the obstacle about to fall into the width scope of the body of the mobile robot.

In the embodiments of the present invention, the distance sensor forms an angle with heading direction of the mobile robot. During the moving course of the mobile robot, it makes the distance sensor easier to detect obstacle in locations deviating from heading direction right in front of the mobile robot. The processor module of the mobile robot will control the mobile robot to change direction in advance according to the obstacle information detected from the distance sensor, thereby bypassing the obstacle.

In one embodiment of the present invention, the navigating method for the mobile robot further includes saving the environmental map so that the environmental map can be repeatedly utilized.

In illustration of the present invention, reference terminologies "the first embodiment", "the second embodiment", "embodiments of the present invention", "one embodiment", "one kind of embodiment", "an embodiment", "embodiments", "specific embodiment", and "some embodiment" etc., means that specific features, structures, materials or features combined in embodiments or examples are implied in at least one embodiment or example of the present invention. In detail description of the present invention, schematic illustration for reference terminologies is not necessarily referring to the same embodiment or example. Moreover, the described specific features, structures, materials or features can be incorporated in any one or more embodiments or examples.

What described above are only the preferred embodiments of the present disclosure and are not intended to limit the present disclosure. Any modifications, equivalent replacements, and alterations made within the spirits and principles of the present disclosure shall be included in the scope of the present disclosure.

## Claims

1. A mobile robot, **characterized in that**, comprising a processor module, and a distance sensor, an auxiliary obstacle avoiding module, and an interacting module which are all connected with the processor module; the distance sensor being configured to scan an operating space of the mobile robot to build an environmental map, and indicate location of obstacle in the environmental map, the distance sensor sending the environmental map to the processor module, the processor module controlling movement of the mobile robot according to the environmental map; the auxiliary obstacle avoiding module being configured to detect obstacle and cliff boundary in a sensing blind area of the distance sensor while the mobile robot is moving, and transfer position information of the obstacle and cliff boundary in the sensing blind area to the processor module, the processor module marking the position information of the obstacle and cliff boundary in the sensing blind area on the environmental map, and delivering the environmental map to the interacting module so as to enable a subscriber to input virtual obstacle information as needed into the environmental map through the interacting module, the virtual obstacle information being fed back to the processor module; the processor module being configured to update the environmental map according to the virtual obstacle information, and plan movement path for the mobile robot according to the environmental map.

2. The mobile robot of claim 1, **characterized in that** the distance sensor forms an angle with a heading direction of the mobile robot so as to detect an obstacle which is in front of the mobile robot and about to fall into a width scope of a body of the mobile robot while the mobile robot is moving, and mark position information of the obstacle about to fall into the width scope of the body of the mobile robot on the environmental map;
the processor module controls the mobile robot to optimize the movement path according to the location information to avoid the obstacle about to fall into the width scope of the body of the mobile robot before colliding with the obstacle.

3. The mobile robot of claim 2, **characterized in that** the angle is greater than or equal to 5 degrees, and less than or equal to 60 degrees.

4. The mobile robot of claim 2, **characterized in that** the mobile robot comprises a main body and a controller separated from the main body; the processor module, the distance sensor and the auxiliary obstacle avoiding module are arranged in the main body, and the interacting module is integrated with the controller.

5. The mobile robot of claim 4, **characterized in that** a first communication module connected with the processor module is arranged in the main body; the controller further comprises a second communication module connected with the interacting module; the first communication module and the second communication module are configured to carry out communication between the main body and the controller.

6. The mobile robot of claim 1, **characterized in that** the mobile robot further comprises a storage module connected with the processor module and the distance sensor, the environmental map being stored in the storage module, so that the environmental map can be repeatedly utilized.

7. The mobile robot of claim 2, **characterized in that** the mobile robot further comprises a storage module connected with the processor module and the distance sensor, the environmental map being stored in the storage module, so that the environmental map can be repeatedly utilized.

8. The mobile robot of claim 3, **characterized in that** the mobile robot further comprises a storage module connected with the processor module and the distance sensor, the environmental map being stored in the storage module, so that the environmental map can be repeatedly utilized.

9. The mobile robot of claim 4, **characterized in that** the mobile robot further comprises a storage module connected with the processor module and the distance sensor, the environmental map being stored in the storage module, so that the environmental map can be repeatedly utilized.

10. The mobile robot of claim 5, **characterized in that** the mobile robot further comprises a storage module connected with the processor module and the distance sensor, the environmental map being stored in the storage module, so that the environmental map can be repeatedly utilized.

11. The mobile robot of claim 6, **characterized in that** the distance sensor is a laser distance sensor, the auxiliary obstacle avoiding module including at least one of a ground detecting unit, a wall detecting unit and a collision detecting unit.

12. The mobile robot of claim 7, **characterized in that** the distance sensor is a laser distance sensor, the auxiliary obstacle avoiding module including at least one of a ground detecting unit, a wall detecting unit and a collision detecting unit.

13. The mobile robot of claim 8, **characterized in that** the distance sensor is a laser distance sensor, the auxiliary obstacle avoiding module including at least one of a ground detecting unit, a wall detecting unit and a collision detecting unit.

14. The mobile robot of claim 9, **characterized in that** the distance sensor is a laser distance sensor, the auxiliary obstacle avoiding module including at least one of a ground detecting unit, a wall detecting unit and a collision detecting unit.

15. The mobile robot of claim 10, **characterized in that** the distance sensor is a laser distance sensor, the auxiliary obstacle avoiding module including at least one of a ground detecting unit, a wall detecting unit and a collision detecting unit.

16. A navigating method for mobile robot, **characterized in that**, comprising:
rotating a mobile robot with a distance sensor at an angle in an operating space, scanning environment of the operating space, initially building an environmental map, and indicating positions of an obstacle in the environmental map;
moving along boundary of the environmental map in a circle, detecting obstacle and cliff boundary in a sensing blind area of the distance sensor, and marking the obstacle and cliff boundary in the sensing blind area of the distance sensor on the environmental map, thereby updating the environmental map;
transmitting the environmental map to an interacting module, inputting virtual obstacle through the interacting module by a subscriber, completing the environmental map;
planning movement path for operation according to the environmental map, avoiding any obstacle and virtual obstacle; and
performing operation according to the movement path.

17. The navigating method for mobile robot of claim 9, **characterized in that** further comprises:
making the distance sensor angled with a heading direction of the mobile robot;
detecting obstacle about to fall into a width scope of a body of the mobile robot while the mobile robot is moving, marking position information of the obstacle about to fall into the width scope of the body of the mobile robot on the environmental map, and updating the environmental map;
optimizing the movement path according to the updated environmental map, avoiding the obstacle about to fall into the width scope of the body of the mobile robot.

18. The navigating method for mobile robot of claim 10, **characterized in that** further comprising saving the environmental map so that the environmental map can be repeatedly utilized.

19. The navigating method for mobile robot of claim 10, **characterized in that** rotating the mobile robot with a distance sensor at an angle in an operating space is:
rotating the mobile robot with a distance sensor at 360 degrees in the operating space.
